Europäisches Patentamt

European Patent Office

Office européen des brevets

(11) Veröffentlichungsnummer: **0 299 477 B1**

## (12) EUROPÄISCHE PATENTSCHRIFT

(45) Veröffentlichungstag der Patentschrift: **21.10.92**

(21) Anmeldenummer: **88111323.7**

(22) Anmeldetag: **14.07.88**

(51) Int. Cl.⁵: **B25B 7/00**, F15B 15/18

(54) **Hydraulisch betätigtes Handgerät.**

(30) Priorität: **15.07.87 DE 3723330**

(43) Veröffentlichungstag der Anmeldung:
**18.01.89 Patentblatt 89/03**

(45) Bekanntmachung des Hinweises auf die
Patenterteilung:
**21.10.92 Patentblatt 92/43**

(84) Benannte Vertragsstaaten:
**CH DE FR GB IT LI**

(56) Entgegenhaltungen:
**DE-A- 3 412 600**
**FR-A- 2 400 997**
**US-A- 4 149 381**

(73) Patentinhaber: **Zahn, Paul**
**Wupperweg 9**
**W-4800 Bielefeld 11(DE)**

(72) Erfinder: **Zahn, Paul**
**Wupperweg 9**
**W-4800 Bielefeld 11(DE)**

(74) Vertreter: **Hoefer, Theodor, Dipl.-Ing. et al**
**Ludwig-Ganghofer-Strasse 20**
**W-8022 Grünwald bei München(DE)**

EP 0 299 477 B1

## Beschreibung

Die Erfindung bezieht sich auf ein hydraulisch betätigtes Handgerät (Handwerkszeug), insbesondere eine hydraulische Zange, Schere o.dgl., zum Schneiden und/oder Verformen von Gegenständen aus hochfestem Material wie Metall, Holz,Hartkunststoff, Keramik o.dgl., oder zum Lösen und Anziehen von Gewindeschrauben oder als Drehmomentschlüssel mit einem Hydrauliksystem mit nachgeschaltetem Druckmittelarbeitszylinder, in dem ein die Werkzeugschenkel o.dgl. des Handgerätes bewegender Druckkolben beaufschlagt ist. Das Druckmittel ist in einem am Handgerät angeordneten Druckmittelbehälter bevorratet und mittels eines mit einem Steuerkolben (Pumpenkolben) gekuppelten Handhebels in den Arbeitszylinder gepumpt.

Soweit es bekannt ist, hydraulikbetätigte Werkzeuge als Schneidwerkzeuge, Verformwerkzeuge o.dgl. für Bolzen, Rohre, Stangen o.dgl. sowie als Verschraubungsgeräte vorzusehen, so ist das einfache hydraulische System des Handwerkzeuges an eine externe Druckmittelquelle über entsprechende Druckmittelleitungen angeschlossen, durch die zwar ein hoher Druck erzeugt werden kann. Der in dem Arbeitszylinder verschiebbare Arbeitskolben ist auch in der Lage, die Werkzeugbacken o.dgl. mit Druck zu bewegen, um auch harte Gegenstände verformen oder trennen zu können. Derartige Werkzeuge sind aber aufwendig; sie können als handliche kleine Handwerkzeuge im eigentlichen Sinne (ohne aufwendigen Fremdantrieb) nicht benutzt werden.

Es ist auch bereits bekannt, eine Hochdruckpumpe für Preßwerkzeuge mit zwei Kolben unterschiedlicher Durchmesser auszustatten, bei der als Steuerelement ein Schieber in einer zum Vorratsbehälter führenden Rücklaufleitung eingeschaltet ist, dem eine in Abhängigkeit vom Arbeitsdruck arbeitende Antriebseinrichtung zugeordnet ist.

Aufgabe der Erfindung ist es, ein gatlungsgemäßes hydraulisch arbeitendes Handwerkzeug (siehe z.B DE-A-3 412 600) zu schaffen, dessen Arbeitskolben mittels unterschiedlicher Druckkräfte am Handhebel mit Druckmittel beaufschlagt werden kann, wobei das Handgerät mit einer Hand allein dabei betätigt und gehalten werden kann. Eine weitere Aufgabe der Erfindung besteht darin, daß der Druck des Druckmittels allein mittels der Bewegung eines Handhebels derartig erzeugt wird, daß auch härtere Werkstücke getrennt oder verformt bzw. verdrallt werden können.

Gemäß der Erfindung wird diese Aufgabe bei einem hydraulisch betätigten Handwerkzeug der genannten Gattung durch die Merkmale des Anspruches 1 gelöst.

Die Druckfläche des inneren Teiles dieses Stufenkolbens gestattet es, einen höheren Druck im Arbeitszylinder mit verhältnismäßig geringerer Handdruckkraft über ein gesondertes Leitungssystem aufzubauen. Dieses erfordert eine gewisse Zeit, da dem Arbeitszylinder nur eine kleine Menge des Druckmittels zugeführt wird.

Um die Druckmittelmenge im Arbeitszylinder vor dem Arbeitskolben schneller zuzuführen, dient die mittlere Druckfläche des Stufenkolbens, dessen geringerer Druck das andere gesonderte Leitungssystem zum Arbeitszylinder beaufschlagt.

Das erfindungsgemäße Differentialventil öffnet bei einem gewissen Staudruck in dem Zylinderraum des die Werkzeugschenkel unmittelbar bewegenden Arbeitskolbens ein Saugventil in der vom größeren Druckraum kommenden Zwischenleitung und hält dieses bei dem gegebenen Betriebsdruck auch weiterhin offen.

Bei einem in diesem Differentialventil eingestellten maximalen Flüssigkeitsdruck und damit bei Öffnung des benachbarten Saugventils wird der größere Druckraum entlastet und die Druckflüssigkeit kann in den Vorratsbehälter zurückfließen. Damit wird zum weiteren Druckanstieg das Hochdrucksystem allein wirksam.

Durch eine derartige Ausbildung ist es möglich, einerseits durch Bewegung des zweistufigen Pumpenkolbens beide Druckmittelleitungssysteme zu beaufschlagen und damit schnell vor dem Kolben das Druckmittel mit einem gewissen Druck aufzubauen.

Mit zunehmendem Druck (und Druckmittelmenge) wird dabei die notwendige Bewegungskraft für den Handhebel immer höher, so daß diese Kraft von einer normalen Hand nicht mehr geliefert werden kann.

Für diesen Fall des Erreichens einer maximalen Handdruckkraft wird somit die zweite Druckmittelleitung in der Weise umgeschaltet, daß das Druckmittel über entsprechende Ventile in den Vorratsbehältern drucklos zurückströmt, so daß nur noch die erste Druckmittelleitung, deren Druck vorzugsweise durch die vordere Stirnfläche des Stufenkolbens bestimmt wird, wirksam ist, so daß dementsprechend - wenn auch bei mehreren Handhebelhüben - der notwendige Maximaldruck im Arbeitszylinder aufgebaut ist.

Mit dem erfindungsgemäßen Differentialventil läßt sich ein besonders vorteilhaftes Zweistufen-Druckmittelsystem erzielen, bei dem einerseits mit größerem Druck eine kleinere Druckmittelmenge und andererseits mit kleinerem Druck eine größere Druckmittelmenge oder beide Systeme zusammen einem Arbeitszylinder mit Arbeitskolben zugeführt wird, so daß die Betätigungskraft an dem den Stufenkolben bewegenden Handhebel unterschiedlich auftritt und durch ein vorzugsweise automatisches Umschalten von dem Zweistufensystem bei zu großer notwendiger Betätigungskraft auf das Einstufensystem zur Erzielung einer geringen Handhebel-Betätigungskraft eine damit erleichterte Pumpenbewegung erreicht werden kann und somit eine ergonomische Handarbeit sich erzielen läßt.

Weitere Merkmale erfindungsgemäßer Geräte ergeben sich aus den Unteransprüchen.

Auf der Zeichnung sind Ausführungsbeispiele der Erfindung dargestellt. Es zeigen:

Fig.1    eine Seitenansicht eines Handgerätes zum Trennen oder Verformen eines Werkstückes;

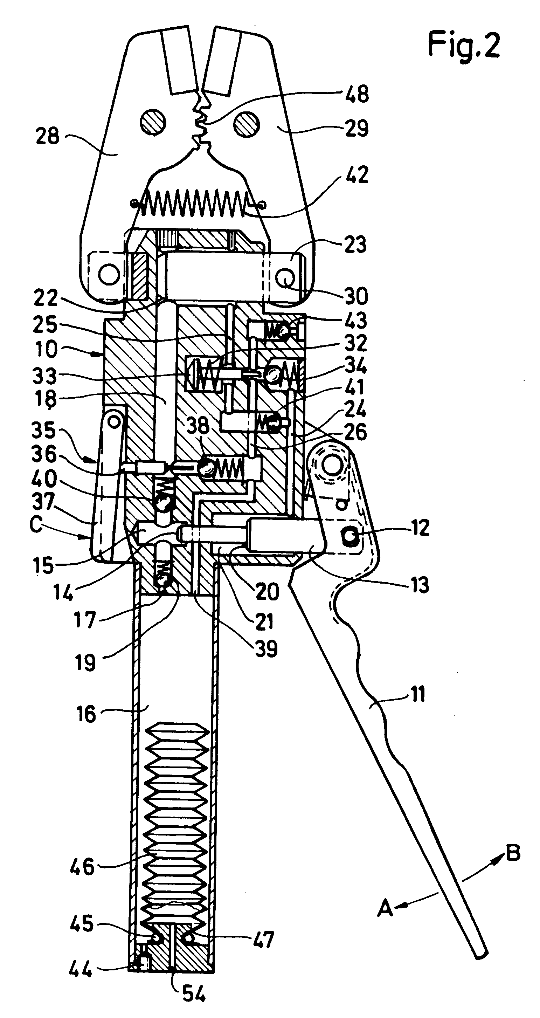

Fig.2    einen Längsschnitt durch dasselbe Handgerät in Ruhestellung mit geschlossenen Ventilen;

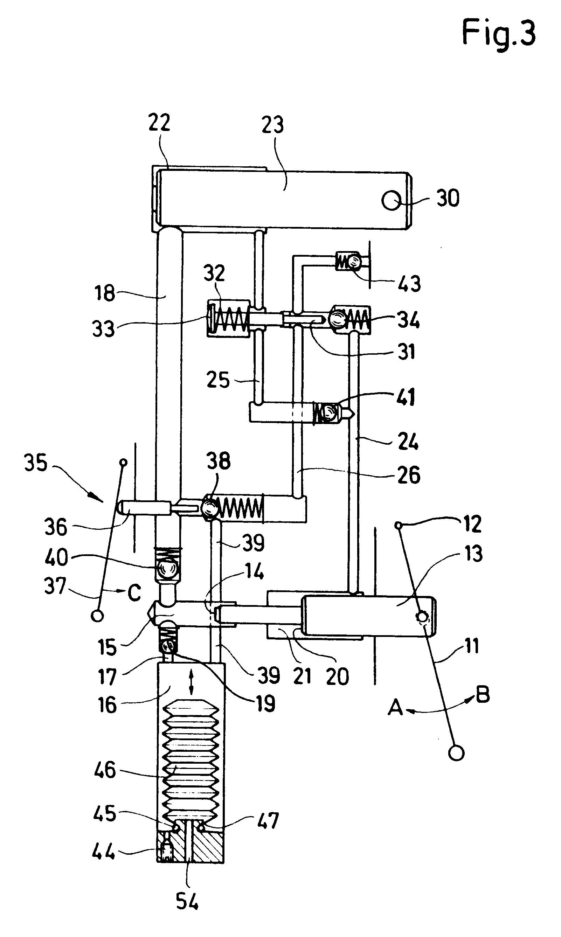

Fig.3    eine schematische Darstellung desselben Handgerätes bei geöffnetem Zweistufen-Druckmittelzuführsystem;

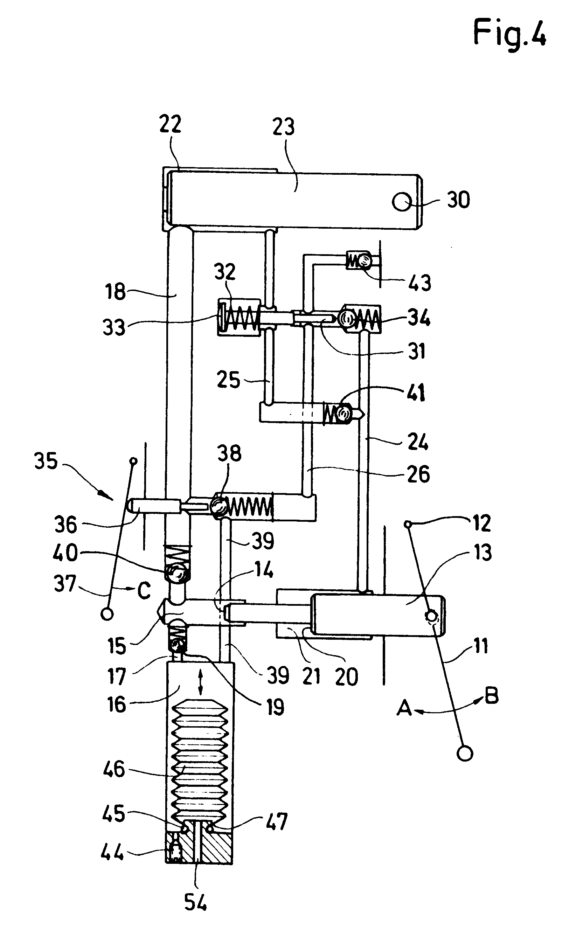

Fig.4    eine schematische Darstellung desselben Druckmittelsystems bei automatischem Rückfluß im Niederdruckbereich;

Fig.5    eine Seitenansicht des Kopfteiles desselben Handgerätes mit schwenkbarer Hebelzange;

Fig.6    einen teilweisen Längsschnitt durch dasselbe Kopfteil mit einem herausbewegbaren Zangenschenkel der Hebelzange;

Fig.7    eine Seitenansicht eines etwas abgeänderten Kopfteiles desselben Handgerätes mit schwenkbarer Hebelzange;

Fig.8    einen teilweisen Längsschnitt durch das in Fig.7 dargestellte Kopfteil;

Fig.9    eine schematische Draufsicht eines abgeänderten Kopfteiles als Momentschlüssel (Verschraubungsgerät);

Fig.10   eine schematische Seitenansicht des in Fig.9 dargestellten Kopfteiles.

An einem Gerätegehäuse 10 ist einseitig mittels eines außenseitigen Achsbolzens 12 zur Betätigung von vorderseitigen Zangenhebeln (als Werkzeug) 28, 29 ein Handhebel 11 gelagert. Mit diesem Handhebel 11 ist ein in das Gerätegehäuse 10 eintauchender Stufenkolben 13 verschiebbar gelagert, der abgedichtet in einer abgestuften Bohrung des Gerätegehäuses 10 verschiebbar ist. Der innere endseitige Teil dieses Stufenkolbens 13 trägt stirnseitig eine kreisförmige Druckfläche 14, die in einen kleinen Druckraum 15 ragt, der einerseits mit einem Vorratsbehälter 16 über eine kurze Leitung 17 und andererseits mit einer Hauptdruckleitung 18 mit einem abgefederten Druckventil 40 verbunden ist, der in einen den Zangenhebeln 28, 29 benachbarten Arbeitszylinder 22 mündet, der quer zur Längsrichtung des Gerätegehäuses 10 sich erstreckt und einen abgedichteten Arbeitskolben (Plungerkolben) 23 aufnimmt.

In der kurzen Leitung 17 lagert ein federbelastetes Saugventil 19, das sich bei einem Vakuum im Druckraum 15 öffnet und die im Vorratsbehälter 16 unter Speicherdruck stehende Druckflüssigkeit (z.B.Öl) zum Druckraum 15 freigibt.

Der mittlere Teil des Stufenkolbens 13 trägt eine größere Druckringfläche 20, welche die auch in einem umgebenden größeren Druckraum 21 sich einfüllende Druckflüssigkeit über Zwischenleitungen 24, 25 und Druckventile 40 dem Arbeitszylinder 22 ebenfalls - jedoch mit niedrigerem Druck als die kreisförmige Druckfläche 14 im Druckraum 15 zudrückt.

Das Gerätegehäuse 10 besitzt somit ein Kanal-(Leitungs-) system, über das mit unterschiedlichen Drücken (Stirnfläche 14 = Hochdruck, Ringfläche 20 = Niederdruck) das Druckmittel (Druckflüssigkeit) dem Arbeitszylinder 22 zuführt, so daß mit verhältnismäßig wenigen Hüben des Handhebels 11 in diesen Arbeitszylinder 22 eine größere Menge der Druckflüssigkeit einströmt. Der notwendige Flüssigkeitsdruck im Arbeitszylinder 22, um nicht nur den Arbeitskolben 23 zu bewegen, sondern auch einen weiteren Druck zu erzeugen (hierdurch bewegen sich die Zangenhebel 28, 29 gegen den Widerstand des eingelegten Werkstückes aufeinanderzu), wird durch weitere Hübe des Handhebels 11 erzeugt, wobei nur die Stirnfläche 14 wirksam ist und einen höheren Druck mit kleinen Mengen der Druckflüssigkeit erzeugt.

Dieses Kanal-(Leitungs-)system wird nämlich ergänzt durch ein weiteres Leitungssystem, das bei einer höheren Betätigungskraft (unter Mitwirkung beider Druckflächen 14, 20 des Stufenkolbens (13) zur Entlastung der Druckkraft am Handhebel 11 und damit der betätigenden Hand der Bedienungsperson dient, um diese menschliche Hand im Sinne der Ergonome nicht zu überanstrengen. Dabei bleibt der größere Druckraum 21 vor der Druckringfläche 20 wirkungslos, so daß bei erniedrigter Betätigungskraft an dem Handhebel 11 nur noch die kreisförmige Druckfläche 14 jedoch - mit dem höheren Druck - wenig Druckflüssigkeit nach und nach vor dem Arbeitskolben 23 drückt. Mit dem weiter steigenden Druck der Druckflüssigkeit in dem Arbeitszylinder 22 muß sich der Arbeitskolben 23 weiter nach außen bewegen und drückt damit die beiden Zangenhebel 28, 29 mit ihrer Scherenfläche o.dgl. gegeneinander. Mit dem Aneinanderdrücken der Scherenfläche o.dgl. wird das eingelegte Werkstück, z.B. ein Bolzen, ein Rohr, zertrennt oder verformt bzw. bei einer Verschraubungszange über ein Drehmoment ein Gewinde angezogen oder gelockert.

Die Arbeitsweise des Gerätes mit der Bewegung der Druckflüssigkeit wird im einzelnen wie folgt beschrieben:

Mit der Betätigung des Handhebels 11 in Richtung B zieht sich der Stufenkolben 13 nach außen und erzeugt dabei in dem kleinen Druckraum 15 sowie in dem größeren Druckraum 21 ein Vakuum, so daß sich das federbelastete Saugventil 19 sowie ein weiteres federbelastetes Saugventil 34 öffnen. Die unter Speicherdruck stehende Druckflüssigkeit strömt dadurch aus dem Vorratsbehälter 16 einerseits durch die kurze Leitung 17 in den kleineren Hochdruckraum 15 und andererseits durch Kanäle 26, 39,eine Zwischenleitung 24, in den größeren Niederdruckraum 21. Dabei hält ein Faltenbalg 46 als Volumenkompensator die Druckflüssigkeit in dem Vorratsbehälter 16 ständig unter einem geringen Speicherdruck.

Mit der Betätigung des Handhebels 11 in die entgegengesetzte Richtung A (auf den Vorratsbehälter 16 zu) drücken sich einerseits die Stirnfläche 14 des Stufenkolbens 13 in den kleineren Hochdruckraum 15 und die mittlere Druckringfläche 20 in den größeren Niederdruckraum 21; dadurch schließen sich die bisher durch den Ansaugvorgang geöffneten Saugventile 19 und 34, während sich zwei Rückschlagventile 40, 41 in der Zwischenleitung 25 und in der Hauptdruckleitung 18 öffnen, so daß auf Grund der pumpenden Bewegung des Handhebels 11 die in den Druckräumen 15 und 21 sich bewegende Druckflüssigkeit einerseits über die Hauptdruckleitung 18 und andererseits über die Zwischenleitung 24, 25 in den Arbeitszylinder 22 tritt und den Arbeitskolben 23 bei einem gewissen Flüssigkeitsdruck nach außen verschiebt.

Diese Pumpenarbeit des Stufenkolbens 13 baut im Arbeitszylinder einen ständig steigenden Druck auf; mit zunächst größerer Flüssigkeitsmenge bei wenigen Hüben des Handhebels 11 und anschließend mit mehr Handhüben des Handhebels 11 (mit jeweils geringerer Flüssigkeitsmenge) jedoch unter Hochdruck.

Zum automatischen Stillsetzen (Druckentlasten) des Niederdruckleitungssystem (Druckraum 21, Zwischenleitung 24, 25, Arbeitszylinder 22), z.B. wenn bei steigendem Druck im Arbeitszylinder 22 die Betätigungskraft am Handhebel 11 zu hoch wird, ist ein erfindungsgemäßes Differentialventil (X) mit Druckfeder 32, Druckfläche 33, Saugventil 24 in der Zwischenleitung 25 angeordnet.

Bei einem in diesem Differentialventil (X) eingestellten maximalen Flüssigkeitsdruck (resultierender Druck) öffnet aufgrund der Differentialdruckfläche 33 der damit verbundene Stößel 31 das Saugventil 34, so daß der größere Druckraum 21 über die Zwischenleitungen 24, 26 und 39 druckentlastet wird und die Druckflüssigkeit in den Vorratsbehälter 16 zurückfließt. Im weiteren Arbeitsablauf bleibt das Saugventil 34 geöffnet, die Flüssigkeit strömt druckfrei in beiden Richtungen.

Dann wird zum weiteren Druckanstieg im Arbeitszylinder 22 das Hochdruckleitungssystem (Druckraum 15, Hauptdruckleitung 18) allein wirksam.

Der Arbeitskolben 23 überwindet bei gewissem Hochdruck die Widerstandskraft des Werksückes und zertrennt und verformt dieses mittels der stirnseitigen Scherenmesser an den Zangenhebeln 28, 29.

Bei dem Ausfahren des Arbeitskolbens 23, der mittels eines Achsbolzens 30 an dem einen Zangenhebel 29 angelenkt ist, bewegt sich dieser Zangenhebel 29 mittels einer Evolventenverzahnung 48 synchron mit dem anderen Zangenhebel 28.

Weiterhin ist ein Sicherheitsventil 35, 38 in dem Gerätegehäuse 10 angeordnet, das in Doppelfunktion auch als Entlastungsventil arbeitet und dessen nach außen vorstehender Stößel 36 mit einem am Gerätegehäuse 10 angelenkten Entlastungshebel 37 (zur Handbetätigung) verbunden ist. Bei Betätigen dieses Entlastungshebels 37 in Richtung C öffnet ein sich verschiebender Stößel 36 und eine federbelastete Ventilkugel 38. Damit kann die Druckflüssigkeit aus der Hauptdruckleitung 18 über eine Leitung 39 als Rückflußleitung wieder in den Vorratsbehälter 16 zuückfließen und damit den Staudruck in dem Arbeitszylinder 22 abbauen, so daß dann eine zwischen den beiden Zangenhebeln 28, 29 eingeschaltete Zugfeder 42 den Arbeitskolben 23 in den Arbeitszylinder druckentlastet zurückschiebt (Ruhe- oder Endlage). Damit öffnet sich gleichzeitig das Werkzeug und ein neues Werkstück kann bearbeitet werden.

In dem Vorratsbehälter 16 ist ein Faltenbalg aus vorzugsweise vorgespanntem federnden Werkstoff als Volumenkompensator 46 in Längsrichtung angeordnet, der sich in Längsrichtung des Vorratsbehälters 16 sowohl beim Zurückfließen der Druckflüssigkeit aus dem Arbeitszylinder als auch beim Einfüllen neuer Druckflüssigkeit zusammendrücken läßt und dann mit seiner inneren linearen Federkraft unter Ausdehnung einen leichten Speicherdruck auf die Saugflüssigkeit erzeugt, damit diese bei geöffneten Saugventilen 19, 34 leicht in die Druckräume 15 und 21 einfließen kann.

Der Innenraum des Volumenkompensators 46 ist über einen Kanal 54 mit der Atmosphäre verbunden.

Der Vorratsbehälter 16 wird dazu über ein seitlich am Gerätegehäuse 10 angeordnetes Anschlußventil 43 gefüllt; dazu ist dann eine im Boden des Vorratsbehälters 16 angeordnete Entlüftungsschraube 44 geöffnet.

Der Volumenkompensator 46 in dem Vorratsbehälter 16, der eine federnde Rückstellkraft in axialer Richtung des Vorratsbehälters 16 ausübt, ist vorzugsweise aus Kunststoff und kann mit einer Metallverstärkung ausgebildet sein; er ist mittels eines Rundschnurringes 45 oder eine Klemmvorrichtung an einem inneren Ansatz 47 am Boden des Vorratsdruckbehälters lösbar befestigt.

Das Saugventil 34 kann eine doppelte Ventilfunktion zeigen. Es kann so ausgelegt sein, daß die Niederdruckstufe der Druckflüssigkeit (Druckraum 21, Zwischenleitung 24) bei Erreichen eines gewissen höheren Flüssigkeitsdruckes, gleichbedeutend mit einem höheren Kraftaufwand am Handhebel 11, automatisch sich abschaltet, so daß nur noch die Hochdruckstufe (Druckraum 15) arbeitet. Somit wird bei gleichbleibender Handdruckkraft der Flüssigkeitsdruck um ein mehrfaches erhöht.

Um die Zangenhebel 28, 29 um einen gewissen Winkel bis zu 90° schwenken zu können, so daß mit dem Hand-Werkzeug auch seitlich nur zugängige Werkstücke bearbeitet werden können, so kann der eine Zangenhebel 28, der nicht an dem Arbeitskolben 23 angelenkt ist, abgehoben werden; dazu ist das geräteseitige Ende des Zangenhebels 28 an einem als Gabel ausgebildeten Haltestück 50 angelenkt, das anhebbar in eine dem Arbeitskolben gegenüberliegende zylindrische Vertiefung 51 im Gehäuse 10 einfaßt.

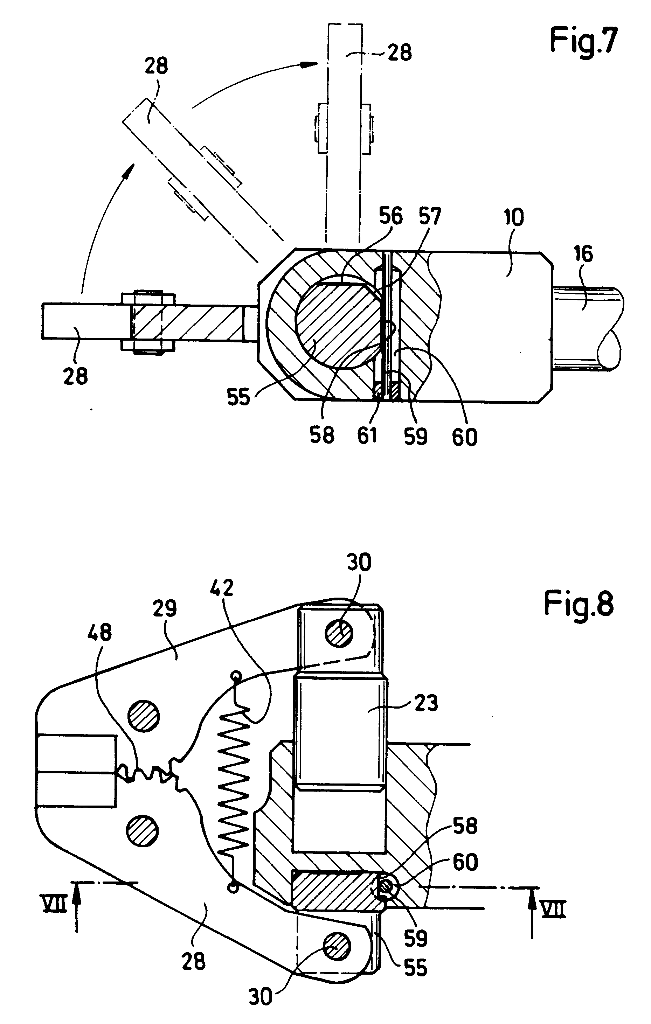

Die Fig.7 und 8 zeigen eine weitere konstruktive Möglichkeit des Handgerätes zum seitlichen Schwenken und Arretieren der Zangenhebel 28, 29.

Dazu ist der Zangenhebel 28 an einem als Gabel ausgebildeten Haltestück 55 angelenkt, in dessen zylindrisches Führungsteil im Winkel zueinanderstehende Anlageflächen 56, 57, 58 eingearbeitet sind.

Quer zur Längsrichtung des Gerätegehäuses 10 ist in einer benachbarten Gehäusebohrung 60 mit abschließender Klemmbuchse 61 ein Federstab 59 eingesetzt, dessen freiliegendes Mittelteil sich bei der jeweiligen Schwenkstellung des Zangenhebels 28 an eine der Anlageflächen 56, 57, 58 anlegt und diese damit arretiert, so daß der Zangenhebel 28 in der gewünschten Stellung gehalten ist.

Zum Ändern der arretierten Stellung wird von Hand o.dgl. kräftig seitlich gegen den Zangenhebel 28 gedrückt, bis dieser in die neue gewünschte Schwenklage sich einlegt.

Durch eine Drehung des Haltestücks 55 läßt sich die Arretierung aufheben, wobei der Federstab 59 um das Eckmaß der Anlagenflächen 56, 67, 58 sich krümmt.

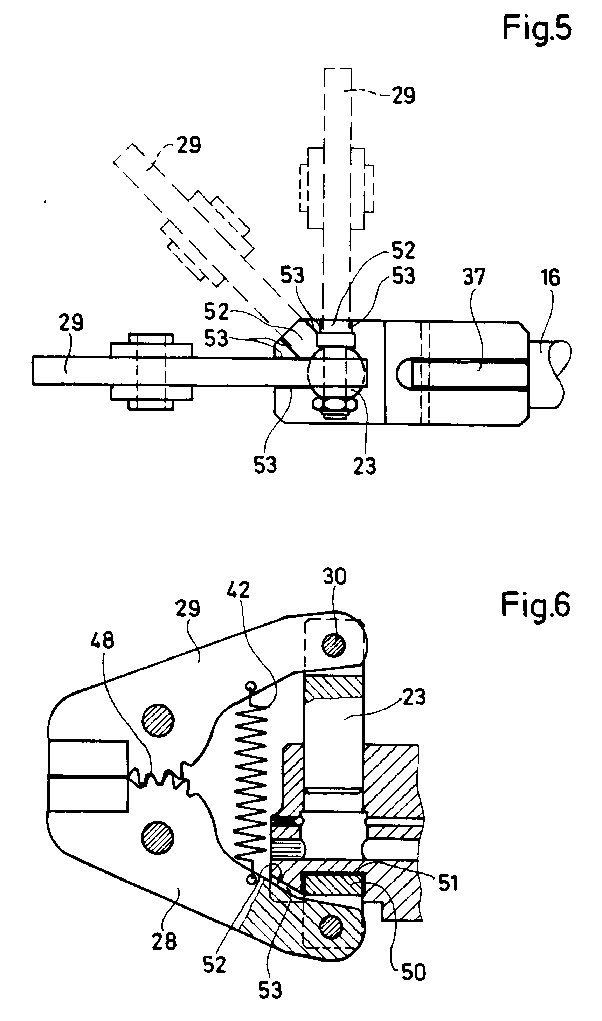

Bei der Ausführung gemäß Fig. 5 ist eine andere Arretierung vorgesehen. Der Zangenhebel 28 ist seitlich durch nasenförmige Seitenflächen 53 und der zylindrischen Vertiefung 51 geführt, so daß ein unbeabsichtigtes seitliches Ausschwenken des Zangenhebels 28 bzw. des Werkzeugkopfes vermieden wird.

Zum Anheben des Zangenhebels 28 in der zylindrischen Vertiefung 52 ist in der Ruhe-Endlage des Arbeitskolbens 23 nur eine geringe Höhe (über die obere Kante 53 der Nut 52) zu überwinden.

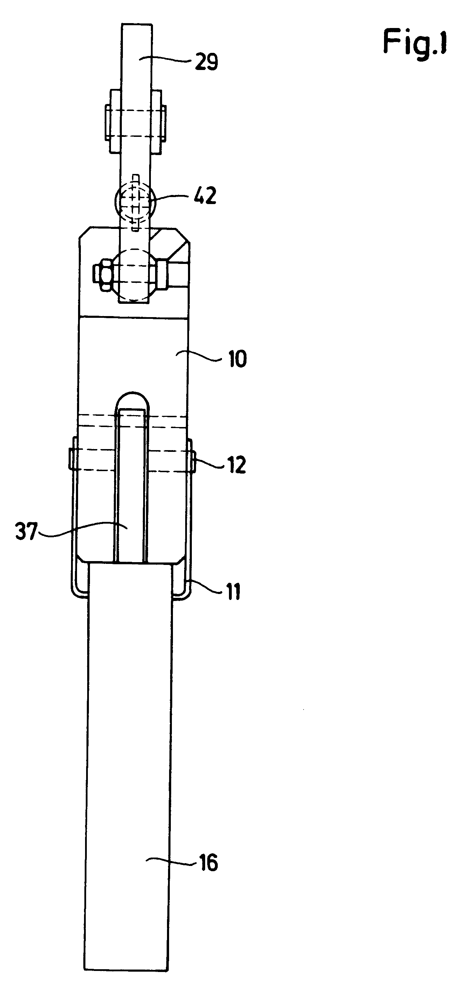

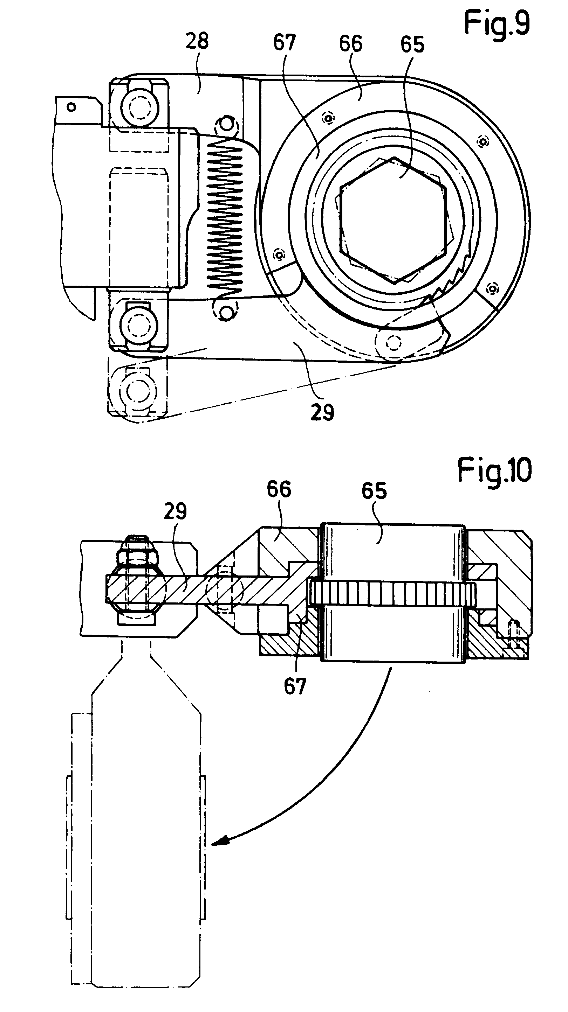

Fig. 9 und 1o zeigen die Ausbildung des Werkzeuges als Verschraubungsgerät, wie z.B. als Drehmomentschlüssel.

Die beiden beweglichen Schenkel 28,29 (vergl. Fig. 1) halten einen Schraubeinsatz 65, dessen lichter Durchmesser der jeweiligen Größe des Vierkantes, des Sechskantes od.dgl. eines Ansatzes auswechselbar angepaßt ist.

Dabei sind die Schenkel 28, 29 endseitig jeweils zu teilkreisförmigen Zangengreifern 66,67 ausgebildet, die in Verschraubungsstellung ineinandergreifen und den mittleren Mehrkanteinsatz 65 halten.

**Patentansprüche**

1. Hydraulisch betätigtes Handgerät wie Zange, Schere o.dgl. zum Schneiden und/oder Verformen von Gegenständen aus hochfestem Material oder Verdrallen von Schrauben o.dgl. mit einem Hydrauliksystem mit nachgeschaltetem Druckmittel-Arbeitszylinder (22), in dem ein das Werkzeug (29) bewegender Druckkolben (23) verschiebbar ist, und wobei das Druckmittel in einem Druckmittelbehälter (16) bevorratet und mittels eines mit einem Steuerkolben (13) gekuppelten Handhebels (11) in den Arbeitszylinder (22) gepumpt wird, und wobei als Steuer- oder Pumpeinrichtung in das Hydrauliksystem ein Stufenkolben (13) eingeschaltet ist, der eine für einen höheren Druck ausgelegte Druckfläche (14) und eine andere, für einen niedrigeren Druck ausgelegte Druckfläche (20) aufweist, dadurch gekennzeichnet, daß in einer zwischen dem einen Duckraum (21) mit der für niedrigeren Druck ausgelegten Druckfläche (20) und einer nachgeschalteten, zum Arbeitszylinder (22) verlaufenden Leitung (25) ein bei einem gewissen Staudruck im Arbeitszylinder (22) das Saugventil (34) öffnende und offenhaltendes Differentialventil (X) eingeschaltet ist, so daß der Druckraum (21) mit der für niedrigeren Druck ausgelegten Druckfläche (20) druckentlastet wird.

2. Handgerät nach Anspruch 1, dadurch gekennzeichnet, daß das Differentialventil (X) mit einem als allseitig druckbelasteten, federgestützten Ventilstößel (33a) ausgestattet ist.

3. Handgerät nach einem der Ansprüche 1 oder 2, dadurch gekennzeichnet, daß die Zylinderräume (15, 21) des einstückigen Stufenkolbens (13) mit dem Druckmittel-Arbeitszylinder(22) über zwei getrennte, im Fördervolumen sowie im Strömungsdruck unterschiedliche Hydrauliksysteme (25, 18) verbunden sind.

4. Handgerät nach einem der Ansprüche 1 bis 3, dadurch gekennzeichnet, daß der einteilige Stufenkolben (13) mit einer für einen höheren Druck ausgelegten Druckfläche (14) und mit einer anderen, für einen niedrigeren Druck ausgelegten Druckfläche (20) versehen ist.

5. Handgerät nach einem der Ansprüche 1 bis 4, dadurch gekennzeichnet, daß die eine Druckfläche (14) für Hochdruck am Ende des Stufenkolbens (13) und die andere Druckfläche (20) für Niederdruck im mittleren Teil des Stufenkolbens (13) angeordnet ist.

6. Handgerät nach einem der Ansprüche 1 bis 5, dadurch gekennzeichnet, daß der Druckraum (15) der Stirnfläche des Stufenkolbens (13) einerseits mit einem Vorratsbehälter (16) und andererseits mit einer Hauptdruckleitung (18) verbunden ist.

7. Handgerät nach einem der Ansprüche 1 bis 6, dadurch gekennzeichnet, daß in einer kurzen Leitung (17) ein Saugventil (19) zum Vorratsbehälter (16) und in einer Hauptdruckleitung (18) ein Druckventil (40) angeordnet sind.

8. Handgerät nach einem der Ansprüche 1 bis 7, dadurch gekennzeichnet, daß in dem Gerätegehäuse (10) ein Sicherheitsventil (35) angeordnet ist.

9. Handgerät nach einem der Ansprüche 1 bis 8, dadurch gekennzeichnet, daß in dem Gerätegehäuse (10) ein vorzugsweise manuell betätigbares Entlastungventil (38) angeordnet ist.

10. Handgerät nach einem der Ansprüche 1 bis 9, dadurch gekennzeichnet, daß das Sicherheits- (35) und Entlastungsventil (38) als ein Ventil ausgebildet sind.

11. Handgerät nach einem der Ansprüche 1 bis 10, dadurch gekennzeichnet, daß zwischen den mit dem Arbeitskolben (23) verbundenen Zangenhebeln (28, 29) eine Zugfeder (42) angeordnet ist.

12. Handgerät nach einem der Ansprüche 1 bis 11, dadurch gekennzeichnet, daß in dem Vorratsbehälter (16) ein elastischer Faltenbalg (46) als Volumenkompensator zur Erzielung eines Speicherdrucks im Vorratsbehälter (16) in Längsrichtung in seiner Länge veränderbar angeordnet ist.

13. Handgerät nach einem der Ansprüche 1 bis 12, dadurch gekennzeichnet, daß der an einer Stirnseite geschlossene Faltenbalg (46) mit seiner anderen Stirnseite mit der Atmosphäre verbunden ist.

14. Handgerät nach einem der Ansprüche 1 bis 13, dadurch gekennzeichnet, daß der Faltenbalg (46) bodenseitig mittels einer Klemmeinrichtung (45) o.dgl. am Boden des Vorratsbehälters (16) befestigt ist.

**Claims**

1. Hydraulically operable hand tool such as grippers, shears, etc. for cutting and/or deforming articles made from high strength material or for twisting screws, etc. with a hydraulic system having a series-connected pressure medium working cylinder (22), in which is displaceable a plunger (23) moving the tool member (2) and in which the pressure medium is stored in a pressure medium tank (16) and is pumped by means of a hand lever (11) coupled to an actuating piston (13) into the working cylinder (22) and in which a differential piston (13) is connected into the hydraulic system as a control or pumping means and which has a pushing area (14) designed for a higher pressure and another pushing area (20) designed for a lower pressure, characterized in that a differential valve (X) opening and maintaining open the suction valve (34) at a given pressure head in the working cylinder (22) is connected between a pressure chamber (21) having the pushing area (20) designed for the lower pressure and a series-connected line (25) passing to the working cylinder (22), so that the pressure chamber (21) with the pushing area (20) designed for the lower pressure is pressure-relieved.

2. Hand tool according to claim 1, characterized in that the differential valve (X) is equipped with a spring-supported valve tappet (33a) pressure-loaded on all sides.

3. Hand tool according to one of the claims 1 or 2, characterized in that the cylinder chambers (15, 21) of the one-piece differential piston (13) are connected to the pressure medium working cylinder (22) by means of two separate hydraulic systems (25, 18), which differ as regards the volumetric delivery and the flow pressure.

4. Hand tool according to one of the claims 1 to 3, characterized in that the one-piece differential piston (13) is provided with a pushing area (14) designed for a higher pressure and with another pressure area (20) designed for a lower pressure.

**5.** Hand tool according to one of the claims 1 to 4, characterized in that the pushing area (14) for the high pressure is located at the end of the differential piston (13) and the other pressure area (20) for the low pressure in the central part of the differential piston (13).

**6.** Hand tool according to one of the claims 1 to 5, characterized in that the pressure chamber (15) of the face of the differential piston (13) is on the one hand connected to a storage tank (16) and on the other to a main pressure line (18).

**7.** Hand tool according to one of the claims 1 to 6, characterized in that a suction valve (19) to the storage tank (16) is located in a short line (17) and a pressure valve (40) is located in a main pressure line (18).

**8.** Hand tool according to one of the claims 1 to 7, characterized in that a safety valve (35) is placed in the tool casing (10).

**9.** Hand tool according to one of the claims 1 to 8, characterized in that the tool casing (10) contains a preferably manually operable relief valve (38).

**10.** Hand tool according to one of the claims 1 to 9, characterized in that the safety valve (35) and relief valve (38) are constructed as a single valve.

**11.** Hand tool according to one of the claims 1 to 10, characterized in that a tension spring (42) is placed between the forked levers (28, 29) connected to the plunger (23).

**12.** Hand tool according to one of the claims 1 to 11, characterized in that in the storage tank (16) an elastic bellows (46) as the volume compensator for obtaining a storage pressure in the tank (16) is arranged in length-variable manner in its longitudinal direction.

**13.** Hand tool according to one of the claims 1 to 12, characterized in that the bellows (46), which is closed on one face, is connected by its other face to the atmosphere.

**14.** Hand tool according to one of the claims 1 to 13, characterized in that the bottom of the bellows (46) is fixed by means of a clamping device (45) or the like to the bottom of the storage tank (16).

**Revendications**

**1.** Appareil à main à commande hydraulique, tel que pince, cisaille ou similaire, pour le découpage et/ou le façonnage d'objets en matériau à haute résistance ou la torsion de vis ou similaires, avec un système hydraulique à cylindre de travail à fluide sous pression (22) placé en aval et dans lequel peut se déplacer un piston de pression déplaçant un outil (29) et le fluide sous pression étant stocké dans un réservoir à fluide sous pression (16) et étant pompé dans le cylindre de travail (22) à l'aide d'un levier à main (11) couplé à un piston de commande (13) et dans le système hydraulique étant incorporé, comme dispositif de commande ou de pompage, un piston étagé (13) présentant une face de pression (14) prévue pour une haute pression et une autre face de pression (20) prévue pour une basse pression, caractérisé en ce que dans une conduite (25) disposée entre l'une des chambres à pression (21) à la face de pression (20) prévue pour la basse pression et une conduite placée en aval, s'étendant vers le cylindre de travail (22) est incorporée une soupape différentielle (X) qui, pour une pression donnée de refoulement dans le cylindre de travail (22), ouvre et maintient ouverte la soupape d'aspiration (34), de manière que la chambre à pression (21) comportant la face de pression (20) prévue pour basse pression est mise hors pression.

**2.** Appareil à main suivant la revendication 1, caractérisé en ce que la soupape différentielle (X) est pourvue d'un poussoir de soupape (33a) sollicité de tous côtés par la pression et supporté par un ressort.

**3.** Appareil à main suivant l'une des revendications 1 ou 2, caractérisé en ce que les chambres de cylindre (15, 21) du piston étagé d'une seule piece (13) sont en communication avec le cylindre de travail à fluide sous pression (22) par deux systèmes hydrauliques (25, 18) séparés, différents en volume de refoulement ainsi qu'en pression du débit.

**4.** Appareil à main suivant l'une des revendications 1 à 3, caractérisé en ce que le piston étagé d'une seule piece (13) est pourvu d'une face de pression (14) prévue pour une haute pression et d'une autre face de pression (20) prévue pour une basse pression.

5. Appareil à main suivant l'une des revendications 1 à 4, caractérisé en ce que l'une des faces de pression (14), prévue pour haute pression, est disposée à l'extrémité du piston étagé (13) et l'autre face de pression (20), prévue pour basse pression, dans la partie centrale du piston étagé (13).

6. Appareil à main suivant l'une des revendications 1 à 5, caractérisé en ce que la chambre à pression (15) de la face frontale du piston étagé (13) est reliée, d'une part, à un réservoir de stockage (16) et, d'autre part, à une conduite de pression principale (18).

7. Appareil à main suivant l'une des revendications 1 à 6, caractérisé en ce que dans une conduite courte (17) est disposée une soupape d'aspiration (19) vers le réservoir de stockage (16) et dans une conduite de pression principale (18), une soupape de refoulement (40).

8. Appareil à main suivant l'une des revendications 1 à 7, caractérisé en ce que dans le boîtier (10) de l'appareil est disposée une soupape de sûreté (35).

9. Appareil à main suivant l'une des revendications 1 à 8, caractérisé en ce que dans le boîtier (10) de l'appareil est disposée une soupape de purge (38), de préférence, à commande manuelle.

10. Appareil à main suivant l'une des revendications 1 à 9, caractérisé en ce que la soupape de sûreté (35) et la soupape de purge (38) se présentent sous forme d'une seule soupape.

11. Appareil à main suivant l'une des revendications 1 à 10, caractérisé en ce qu'entre les leviers à pinces (28, 29) reliés au piston de travail (23) est disposé un ressort de traction (42).

12. Appareil à main suivant l'une des revendications 1 à 11, caractérisé en ce que dans le réservoir de stockage (16) est disposé, comme compensateur de volume, un soufflet (46) variable en longueur dans le sens longitudinal, pour l'obtention d'une pression accumulée dans le réservoir de stockage (16).

13. Appareil à main suivant l'une des revendications 1 à 12, caractérisé en ce que le soufflet (46) fermé d'un côté frontal est, par son autre côté frontal, en communication avec l'atmosphère.

14. Appareil à main suivant l'une des revendications 1 à 13, caractérisé en ce que le soufflet (46) est, du côté inférieur, fixé au fond du réservoir de stockage (16) par un dispositif de serrage (45) ou similaire.

## Fig.1

# Fig.2

EP 0 299 477 B1

Fig.3

# Fig.4

## Fig.5

## Fig.6

Fig.7

Fig.8

Fig.9

Fig.10